# EUROPEAN PATENT APPLICATION

(11) **EP 2 418 397 A1**
(43) Date of publication of application: **15.02.2012**
(21) Application number: 11175906.4
(22) Date of filing: 29.07.2011
(51) Int. Cl.: F16H 1/48, F03D 11/02

(54) **Gearbox support system**

(30) Priority: 11.08.2010 US 854434
(71) Applicant: General Electric Company, Schenectady, NY 12345 (US)
(72) Inventor: Longtin, Randy Scott, Niskayuna, NY New York 12309 (US)
(74) Representative: Bedford, Grant Richard

(57) **Abstract**

A rotary machine (10) including a constant force support mechanism (12) is provided. The rotary machine (10) includes a rotor (16), an input shaft (18) coupled to the rotor (16), a gearbox (20) coupled to the input shaft (18), and at least one cantilevered component coupled to the gearbox (20). The rotary machine (10) further comprises a constant force support mechanism (12) coupled to at least one of the gearbox (20), the at least one cantilevered component.

## Description

The invention relates generally to gearbox support systems and, in particular, to a support system for preventing misalignment of gears in a gearbox by ensuring that the downwind bearings load is within acceptable limits.

In conventional wind turbines, the gear train comprises a planetary gearbox driven by an input shaft that is rotated due to wind loads acting on a plurality of rotor blades. The gear train is used to drive an electric generator, which is generally cantilevered to the gearbox. The rotor generally provides a low speed, high torque input to the gearbox. The gearbox provides a high speed, low torque output to the generator.

The gearbox and the attached cantilevered generator may weigh many tons. The loads of the gearbox and the generator result in a load on the planetary gear train. Such loads are generally referred to as gearbox internal gear loads or simply gearbox loads. During operation of the wind turbine, the gearbox loads may be dynamic in nature. The gearbox loads causes vertical deflection of the gearbox which in turn causes gear tooth misalignment and therefore reduced gearbox life. It is therefore desirable to support the gearbox to reduce the deflection of the gearbox.

Conventionally, the gearbox is supported by an input shaft and torque arms. Torque arms connect a gearbox outer casing to a bedplate using a relatively soft elastomer interface that dampens dynamic loads. The torque arms can be placed such that a center line of the arms passes through an upwind gearbox bearing. This is because providing the torque arms further downwind generally increases the gearbox internal gear loads.

It is desirable to have suitable gearbox support mechanisms, which can support the gearbox's cantilevered loads under various extreme loading events and also against dynamic loads.

In accordance with one exemplary embodiment disclosed herein, a rotary machine including a constant force support mechanism is provided. The rotary machine includes a rotor, an input shaft coupled to the rotor, a gearbox coupled to the input shaft, and at least one cantilevered component coupled to the gearbox. The rotary machine further comprises a constant force support mechanism coupled to at least one of the gearbox, the at least one cantilevered component.

Various features, aspects, and advantages of the present invention will become better understood when the following detailed description is read with reference to the accompanying drawings in which like characters represent like parts throughout the drawings, wherein:
FIG. 1 is a diagrammatical representation of a constant force support mechanism coupled to a gearbox outer casing of a wind turbine in accordance with an exemplary embodiment disclosed herein;
FIG. 2 is a diagrammatical representation of a constant force support mechanism in accordance with the embodiment of FIG 1;
FIG. 3 is a diagrammatical representation of wind loads acting on a input shaft, forces exerted by a constant force support mechanism, a generator, and a gearbox in accordance with the embodiment of FIG 1;
FIG. 4 is a diagrammatical representation of a constant force support mechanism coupled to a generator of a wind turbine in accordance with an exemplary embodiment disclosed herein; and
FIG. 5 is a diagrammatical representation of wind loads acting on an input shaft, forces exerted by a constant force support mechanism, a generator, and a gearbox in accordance with the embodiment of FIG 4.

As discussed in detail below, various embodiments of the present invention provide a gearbox support system for a rotary machine. In one embodiment the rotary machine is a wind turbine. This invention may, however be, embodied in many different forms and should not be construed as limited to the embodiments set forth herein; rather these embodiments are provided so that this disclosure will be thorough and complete and will fully convey the scope of the invention to those skilled in the art. In an exemplary embodiment, a constant force support mechanism to support the gearbox is provided.

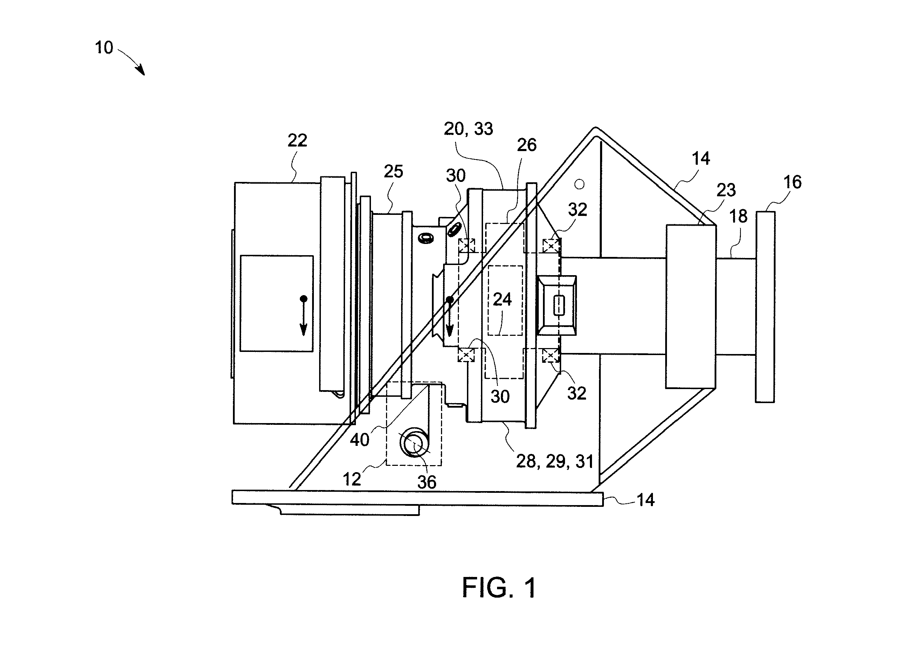

FIG.1 illustrates schematic representation of a wind turbine 10 in accordance with an exemplary embodiment of the invention. The wind turbine 10 includes a constant force support mechanism 12, a bedplate 14, a rotor 16, an input shaft 18, a gearbox 20 (generally referred to as the primary gearbox), and a generator 22. The rotor 16, the input shaft 18, the gearbox 20, and the generator 22 are supported on the bedplate 14. The rotor 16 is coupled to the gearbox 20 via the input shaft 18. The input shaft 18 is supported via a plurality of main bearings 23. The gearbox 20 is coupled to the generator 22 via an output shaft (not shown). The gearbox 20 is typically used to transmit and increase the speed of the output shaft to the generator 22. The rotor 16 rotates in response to wind across the wind turbine 10. The rotary motion of the rotor 16 is transmitted through the input shaft 18, the gearbox 20, and the output shaft, to the generator 22. The generator 22 is configured to generate power.

According to an embodiment of the present invention, the gearbox 20 is connected directly to the generator 22 via fasteners or any other suitable fastening means. According to other embodiments of the invention, a secondary gearbox 25 may be deployed between the gearbox 20 and the generator 22. The secondary gearbox 25 may be used to further increase the speed of the output shaft to the generator 22. It is to be understood that the wind turbine 10 may include any number of gearboxes and generators.

According to an exemplary embodiment of the present invention, the gearbox 20 includes a gear train 24 having a sun gear and a plurality of planet gears disposed inside a carrier 26. The carrier 26 is disposed inside an outer casing 28 and coupled to the input shaft 18. Typically, depending upon the requirements, the wind turbine 10 may deploy various types of gearboxes. It is to be understood that the present invention is not limited by the type of gearbox 20 used in the wind turbine 10. The carrier 26 is supported by a plurality of downwind gearbox bearings 30, and a plurality of upwind gearbox bearings 32. The casing 28 includes an outer surface 29 including a lower portion 31 and an upper portion 33.

The configuration of the wind turbine 10 is an exemplary embodiment and should not be in any way construed as limiting the scope of the invention. The secondary gearbox 25, and the generator 22 can be referred to as cantilevered components coupled to the gearbox 20. Cantilevered components is generally added downstream (away from the side of the rotor 16) of the gearbox 20. It is to be understood that other cantilevered component may be coupled to the gearbox 20 either directly or through the existing cantilevered components the secondary gearbox 25 and the generator 22. Also, even though a wind turbine is described herein, the constant force support mechanism 12 discussed below is also suitable for other applications having gearbox systems.

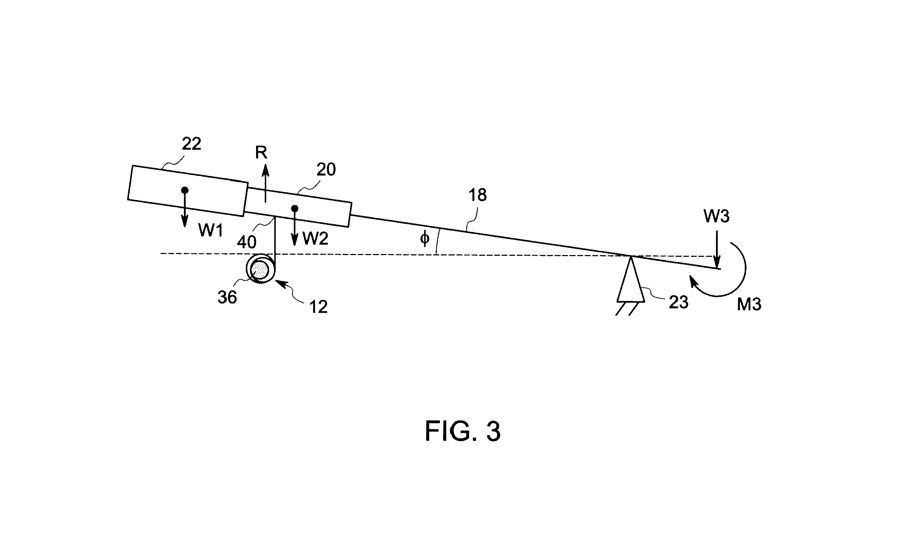

Load of the generator 22 and the gearbox 20 are main contributors to the gearbox loads acting on the gear train 24. Under varying wind load conditions, the gearbox loads may be dynamic in nature. This phenomenon is further explained in conjunction with FIG 3. The gearbox loads causes a vertical deflection of the gearbox 20. The deflection causes gear tooth misalignment, which results in reduced gearbox life. The downwind gearbox bearings 30 and the upwind gearbox bearings 32 are used to support the carrier 26. It should be noted herein that a vertical load acting on the downwind gearbox bearings 30 is indicative of the deflection of the gearbox 20 and the resulting gear tooth misalignment. The greater the vertical deflection of the gearbox 20, the greater is the vertical load on the downwind gearbox bearings 30. By keeping the downwind gearbox bearings 30 load within a specific limit, it can be ensured that the vertical deflection of gearbox 20 is within a corresponding specific limit, and therefore the misalignment of gears is prevented or is within acceptable limits.

Embodiments of the present invention described herein below disclose mechanism to reduce deflection of gearbox 20 by supporting the gearbox 20 and reducing load on the downwind gearbox bearing such that the vertical load acting on the downwind gearbox bearings 30 is maintained within a specific limit. In the illustrated embodiment, the constant force support mechanism 12 pushes the outer casing 28 upwards against the downward acting gearbox load and thus maintains the load acting on the downwind and upwind gearbox bearings 30, 32 within specific limits. In a specific exemplary embodiment, the combined load of the gearbox 20 and the generator 22 is 290000 Newton and it is desirable to maintain the vertical load acting on the downwind gearbox bearings 30 within 158000 Newton so as to maintain the vertical gearbox and the resulting misalignment of gears within acceptable limits.

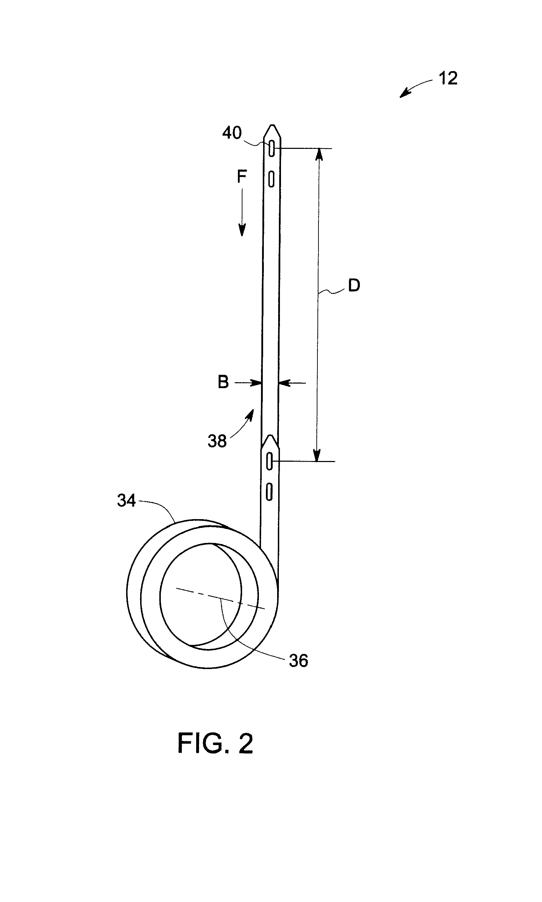

FIG 2 illustrates the constant force mechanism 12 in detail according to an exemplary embodiment of the present invention. In one embodiment, the constant force support mechanism 12 is a pretensioned metal coil spring or a pretensioned coiled metal member that acts as a coiled spring. According to the embodiment, the constant force support mechanism 12 comprises a first portion 34 wound around a shaft 36 (only centerline of the shaft 36 is shown in FIG 2). The shaft 36 is coupled to the bedplate 14. The constant force support mechanism 12 further comprises a second portion 38, which includes an end 40.

In reference to both FIG 1 and FIG 2, the end 40 of the constant force support mechanism 12 is coupled to the lower portion of the gearbox outer casing 28, proximate to the downwind gearbox bearings 30. The constant force support mechanism 12 is configured to reduce the deflection of gearbox 20 by supporting the gearbox 20 and maintaining the vertical load acting on the downwind gearbox bearings 30 within a specific limit. In the illustrated embodiment, the constant force support mechanism 12 pushes the outer casing 28 upwards against the downward acting gearbox load and thus maintains the load acting on the downwind and upwind gearbox bearings 30, 32 within specific limits. In a specific exemplary embodiment, the combined load of the gearbox 20 and the generator 22 is 290000 Newton and it is desirable to keep the vertical load acting on the downwind gearbox bearings 30 within 158000 Newton so as to maintain the vertical deflection of the gearbox within acceptable limits. The constant force support mechanism 12 is configured to provide a constant force upward against downward acting gearbox loads. It should be noted that any additional cantilevered component may be cantilevered to the gearbox 20. Such additional cantilevered component will also contribute to the load on the gear train 24, and subsequently on the bearings 30, 32, in the gearbox 20. It is evident that the constant force support mechanism 12 is designed to support the bearings 30, 32 against all such loads.

Due to the generator 22 and gearbox 20 loads W1, W2, the end 40 of the constant force support mechanism 12 compresses through a distance D, as illustrated in FIG 2. The distance of compression usually depends on the stiffness of the spring, the magnitude of W1 and W2, and also on the wind loads W3 and M3 acting on the rotor 16. In response to the compression, the constant force support mechanism 12 exerts a constant force R, i.e. the force is independent of the distance D, upward against the gearbox outer casing 28. The force reduces downwind gearbox bearings 30 load such that the deflection of gearbox 20 and the resulting misalignment of gears is within acceptable limits.

FIG 3 is a diagrammatical representation of wind loads acting on the input shaft 18, the forces exerted by the constant force support mechanism 12, the generator 22, and the gearbox 20 in accordance with the embodiment of FIG. 1. The wind loads having a force component W3 and a moment component M3 causes the input shaft 18 to rotate by an angle φ. The main bearing 23 acts as a fulcrum for the rotation of input shaft 18. The generator 22 load represented as W1 and the gearbox 20 load represented as W2 act on the input shaft 18 in the direction of gravity. Loads W1 and W2 are constant in nature. However, varying wind load conditions causes variation in angle φ (phi), as illustrated in FIG 3, created due to rotation of the input shaft 18. The variation causes dynamic gearbox loads. In the illustrated embodiment, the constant force support mechanism 12 is located below the gearbox 20 and is coupled to the gearbox outer casing 28 at a location proximate to the downwind gearbox bearings 30. The loads W1 and W2 causes the end 40 of the constant force support mechanism 12 to compress downwards. The constant force support mechanism 12 provides a constant force R, in the direction illustrated in FIG 8, against any downward movement of the end 40. The force R reduces the load on the downwind gearbox bearings 30 and ensures that the load is within a predetermined limit. In a specific embodiment, the constant force support mechanism 12 exerts a constant force of 268000N. In the specific embodiment it is desirable that the load on the downwind gearbox bearings 30 is maintained within 158000 Newton to ensure that the vertical deflection of gearbox 20 and the resulting misalignment of the gears is within acceptable limits. When the constant force support mechanism 12 exerting a constant force of 268000 Newton is used in the configuration illustrated in FIG 6, the constant force support mechanism 12 reduced the load on the downwind gearbox bearing 30 from 289651Newton (the load on the downwind gearbox bearing 30 without the constant force mechanism) to 699Newton.

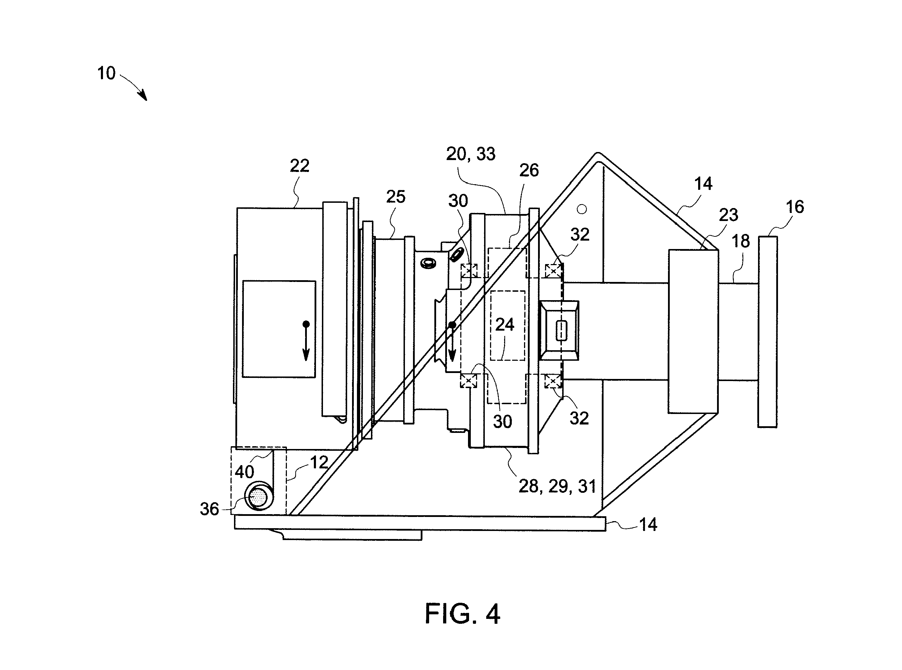

FIG 4 illustrates another exemplary embodiment of the present invention. As illustrated in the figure, the constant force support mechanism 12 couples the generator 22 to the bedplate 14. The end 40 of the constant force support mechanism 12 is coupled to a lower portion of the generator 22. During the operation of the wind turbine 10, the generator load, represented by W1, and the gearbox load, represented by W2, causes a downward movement of the generator 22, which in turn compresses the end 40 of the constant force support mechanism 12 downwards. The constant force support mechanism 12 provides a constant force R upwards against any downward movement of the end 40.

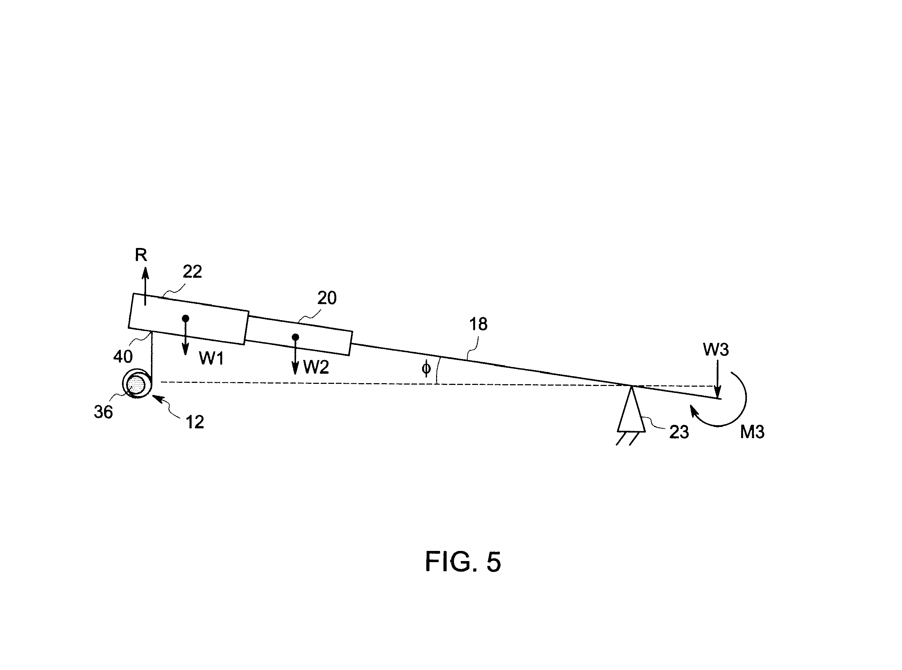

FIG 5 is a diagrammatical representation of wind loads acting on the input shaft 18, the forces exerted by the constant force support mechanism 12, the generator 22, and the gearbox 20 in accordance with the embodiment of FIG. 4. The wind loads having a force component W3 and a Moment component M3 causes the input shaft 18 to rotate by an angle φ. The wind loads may have three dimensional force components and three dimensional moment components. The main bearings 23 act as a fulcrum for the rotation of input shaft 18. The generator 22 load represented as W1 and the gearbox 20 load represented as W2 act on the input shaft 18 in the direction of gravity. In the illustrated embodiment, the constant force mechanism 12 is located below the gearbox 20 and is coupled to a lower portion of the generator 22. The constant force mechanism 12 exerts a constant force upward against the generator in response to a downward movement of the end 40. The constant force support mechanism 12 supports the downwind and the upwind gearbox bearings 30, 32 against the load W1 of the generator 22 and the load W2 of the gearbox 20. Loads W1 and W2 are constant in nature. However, varying wind load conditions causes variation in angle φ (phi), as illustrated in FIG 3, created due to rotation of the input shaft 18. The variation causes dynamic gearbox loads. It should be noted that any additional hardware, other than the generator 22, may be cantilevered to the gearbox 20. Such additional hardware will also contribute to the gearbox load, and subsequently on the bearings 30, 32, in the gearbox 20. It is evident that the constant force support mechanism 12 is designed to support the bearings 30, 32 against all such loads.

The constant force support mechanism 12 for the embodiment in FIG 4 may be designed to provide a force of different magnitude than the constant force support mechanism 12 for the embodiment illustrated in FIG 1.

In certain other exemplary embodiments, the system may include two constant force mechanisms 12. In one embodiment, one constant force support mechanism 12 may couple the gearbox 20 to the bedplate 14, whereas the other constant force support mechanism 12 may couple the generator 22 to the bedplate 14.

The constant force support mechanism 12 supports the gearbox and ensures that the downwind gearbox bearings 30 load do not exceed a predetermined limit, thereby ensuring that the deflection of the gearbox do not exceeds limits. The constant force support mechanism 12 prevents misalignment of gears in the gear train 24.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A rotary machine comprising:
   a rotor;
   a input shaft coupled to the rotor;
   a gearbox comprising a gear train coupled to the input shaft;
   at least one cantilevered component coupled to the gearbox and disposed downwind of the gearbox; and
   a constant force support mechanism coupled to at least one of the gearbox, the at least one cantilevered component.
2. The rotary machine of clause 1, wherein the constant force support mechanism is configured to prevent misalignment of gears in the geartrain.
3. The rotary machine of any preceding clause, wherin the rotary machine is a wind turbine.
4. The rotary machine of any preceding clause, wherein the gearbox comprises an outer casing; wherein the constant force support mechanism is coupled to the outer casing of the gearbox.
5. The rotary machine of any preceding clause, wherein the constant force support mechanism is coupled to a lower portion of an outer surface of the outer casing of the gearbox.
6. The rotary machine of any preceding clause, wherein the gearbox further comprises a pair of downwind gearbox bearings and a pair of upwind gear bearings to support the gearbox, wherein the constant force support mechanism is coupled to a location proximate to the downwind gearbox bearing.
7. The rotary machine of any preceding clause, wherein the gearbox further comprises a pair of downwind gearbox bearings and a pair of upwind gear bearings to support the gearbox, wherein the constant force support mechanism is configured to maintain the load on the downwind gearbox bearings within a prespecified limit.
8. The rotary machine of any preceding clause, wherein gearbox comprises a primary gearbox.
9. The rotary machine of any preceding clause, wherein the at least one cantilevered component comprises a secondary gearbox.
10. The rotary machine of any preceding clause, wherein the secondary gearbox is coupled to a beplate through the constant force support mechanism.
11. The rotary machine of any preceding clause, wherein the at least one cantilevered component comprises a generator, wherein the gearbox is configured to transmit the rotary motion of the rotor to the generator to generate power.
12. The rotary machine of any preceding clause, wherein the generator is coupled to a bedplate through the constant force support mechanism.
13. The rotary machine of any preceding clause, wherein the constant force support mechanism comprises a pretensioned metal coiled spring, wherein pretensioned coiled metal coil comprises a first portion wound around a shaft coupled to a bedplate.
14. The rotary machine of any preceding clause, wherein pretensioned metal coil spring comprises a second portion.
15. The rotary machine of any preceding clause, wherein the second portion comprises an end coupled to the at least one cantilevered component.

## Claims

1. A rotary machine (10) comprising:
a rotor (16);
a input shaft (18) coupled to the rotor (16);
a gearbox (20) comprising a gear train (24) coupled to the input shaft (18);
at least one cantilevered component coupled to the gearbox (20) and disposed downwind of the gearbox (20); and
a constant force support mechanism (12) coupled to at least one of the gearbox (20), the at least one cantilevered component.

2. The rotary machine (10) of claim 1, wherein the gearbox (20) comprises an outer casing (28); wherein the constant force support mechanism (12) is coupled to the outer casing (28) of the gearbox (20).

3. The rotary machine (10) of claim 2, wherein the constant force support mechanism (12) is coupled to a lower portion (31) of an outer surface (29) of the outer casing (28) of the gearbox (20).

4. The rotary machine (10) of any preceding claim, wherein the gearbox (20) further comprises a pair of downwind gearbox bearings (30) and a pair of upwind gear bearings (32) to support the gearbox (20), wherein the constant force support mechanism (12) is coupled to a location proximate to the downwind gearbox bearing (30).

5. The rotary machine (10) of claim 4, wherein the gearbox (20) further comprises a pair of downwind gearbox bearings (30) and a pair of upwind gear bearings (32) to support the gearbox (20), wherein the constant force support mechanism (12) is configured to maintain the load on the downwind gearbox bearings (30) within a prespecified limit.

6. The rotary machine (10) of any preceding claim, wherein gearbox (20) comprises a primary gearbox.

7. The rotary machine (10) of any preceding claim, wherein the at least one cantilevered component comprises a secondary gearbox (25).

8. The rotary machine (10) of claim 7, wherein the secondary gearbox (25) is coupled to a beplate (14) through the constant force support mechanism (12).

9. The rotary machine (10) of any preceding claim, wherein the at least one cantilevered component comprises a generator (22), wherein the gearbox (20) is configured to transmit the rotary motion of the rotor (16) to the generator (22) to generate power.

10. The rotary machine (10) of claim 9, wherein the generator (22) is coupled to a bedplate (14) through the constant force support mechanism (12).
